# EUROPEAN PATENT SPECIFICATION

(11) **EP 2 471 630 B1**
(45) Date of publication and mention of the grant of the patent: **08.01.2014**
(21) Application number: 10812173.2
(22) Date of filing: 09.08.2010
(51) Int. Cl.: B23Q 7/00, B23Q 7/02, B23Q 5/22, B65G 47/80, F16C 13/00

(54) **PALLET FEED MECHANISM FOR A MACHINE TOOL**
PALETTENZUFÜHRMECHANISMUS FÜR EINE WERKZEUGMASCHINE
MÉCANISME DE CHARGEMENT DE PALETTES POUR UNE MACHINE-OUTIL

(30) Priority: 25.08.2009 KR 20090078455
(43) Date of publication of application: 04.07.2012
(73) Proprietor: Doosan Infracore Co., Ltd., Dong-gu Incheon 401-020 (KR)
(72) Inventor: LEE, Joong Kwoen, Busan 612-021 (KR)
(74) Representative: Isarpatent
(86) International application number: PCT/KR2010/005203
(87) International publication number: WO 2011/025159

(56) References cited:
- EP-A1- 0 001 152
- JP-A- 61 095 847
- JP-A- 61 095 847
- JP-U- H 074 437
- JP-U- H0 678 332
- KR-B1- 100 779 825
- US-A- 4 291 797
- US-A- 4 373 840

## Description

### [Technical Field]

The present invention relates to a pallet transferring apparatus of a machine tool, and more particularly, to a structure for a stable operation of a pallet transferring apparatus in a multi-pallet system (MPS) with several pallets.

### [Background Art]

In a machine tool, a multi-pallet system (MPS) as a so-called multi-pallet system is an apparatus that includes multiple pallets and can successively process a large quantity of workpieces while moving the pallet by setting a plurality of workpieces.

Therefore, since several pallets move to a processing table where a cutting process is performed to achieve the cutting process, the pallets are repetitively moved and position-changed by a pallet transferring apparatus called a carrier.

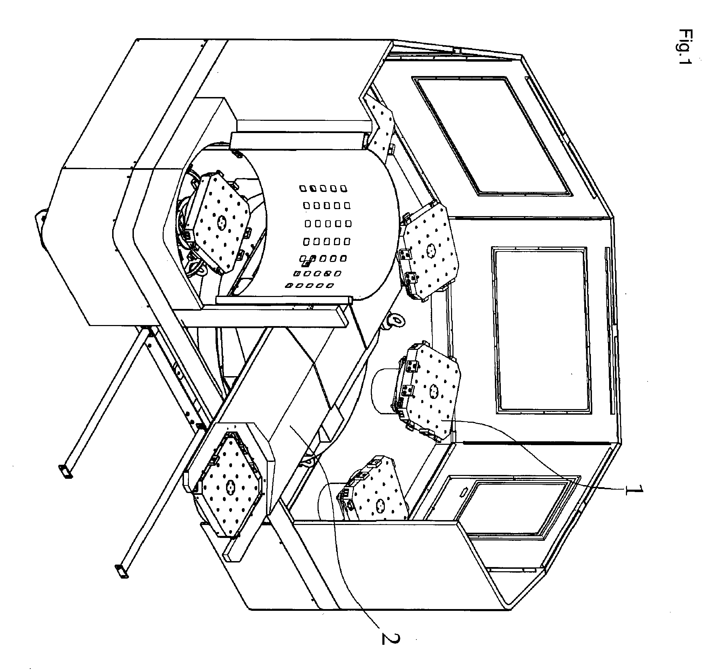

When the pallet transferring apparatus in the multi-pallet system will be described with reference to FIG. 1, a plurality of pallets 1 are generally disposed and a pallet transferring apparatus 2 is installed between the pallet 1 and the processing table side, and as a result, the pallet 1 is moved to the processing table side by the pallet transferring apparatus 2.

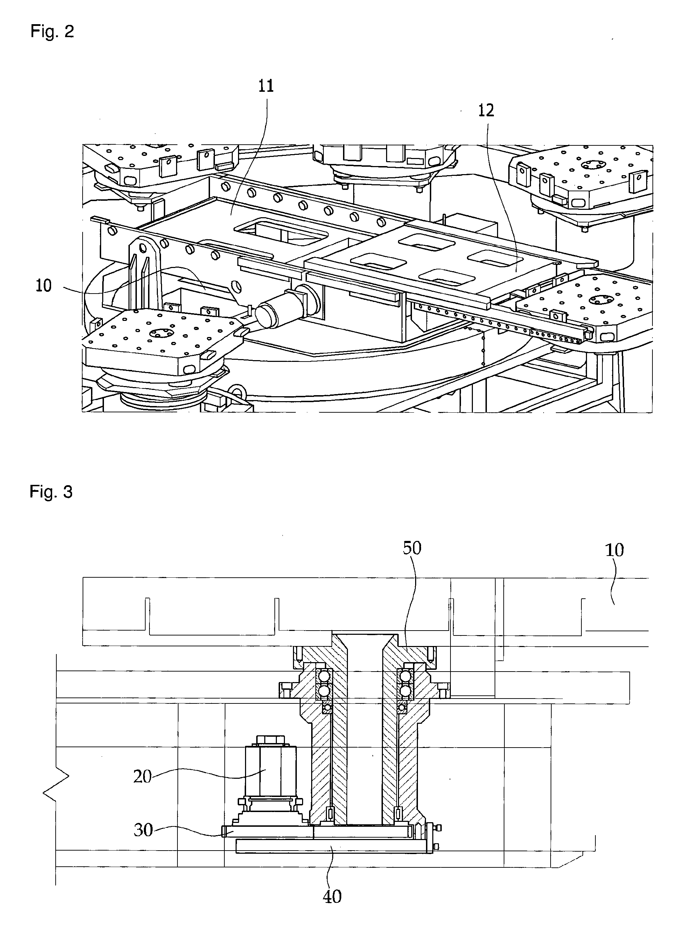

When a structure of the pallet transferring apparatus will be described with reference to FIG. 2, in general, a carrier frame 11 is coupled onto a carrier body 10 in the pallet transferring apparatus and the pallet transferring apparatus may be configured by a carrier 12 which reciprocates along the carrier frame 11. The carrier 12 may grip a pallet to be moved and the carrier 12 linearly moves the pallet by linearly moving along the carrier frame 11 while gripping the pallet.

In this case, while the carrier 12 grips the pallet to be moved, the carrier body 10 rotates to position a pallet to be worked toward the processing table and the carrier 12 moves toward the processing table along the carrier frame 11 to process the workpiece set on the pallet.

Therefore, the pallet transferring apparatus should linearly move the pallet along the carrier frame 11 and rotate the carrier body 10 supporting the carrier frame 11.

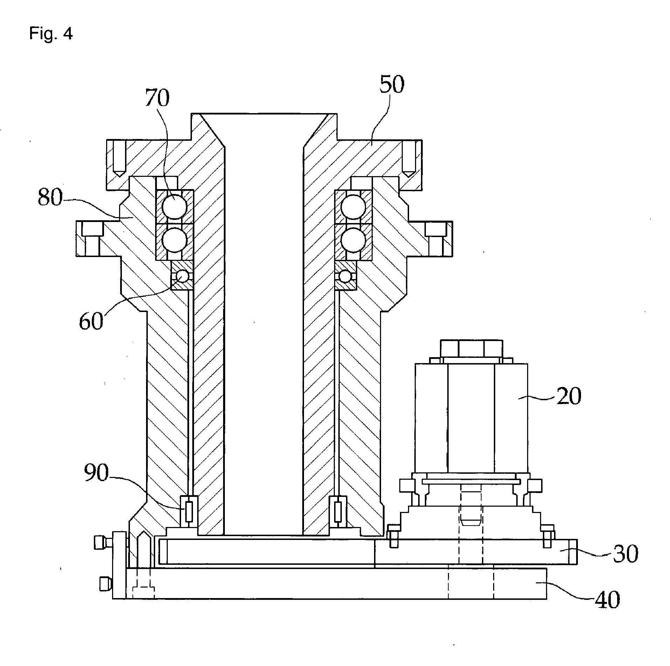

When a structure for rotating the carrier body 10 in the pallet transferring apparatus in the related art will be described with reference to FIGS. 3 and 4, a rotating shaft 50 is coupled to the bottom of the carrier body 10 and rotational driving force generated by a servo motor 20 is transferred to a gear 30 to rotate the rotating shaft 50.

Further, since the rotating shaft 50 supports loads of the carrier body 10 and the pallet including the workpiece, a shaft-direction load is supported by a thrust bearing 60 and a vertical load of a shaft of the rotating shaft is supported by a bearing 70.

Therefore, when the size of the pallet transferring apparatus increases, the lengths of the carrier body 10 and the carrier frame 11 also increase and the rotating shaft 50 supporting the carrier body 10 should also be upsized, and a linear movement distance of the pallet is increased such that the center of weight is further from the rotating shaft of the carrier body 10, and as a result, a moment load by the load of the workpiece increases.

A light-weight workpiece having a low allowable load of the pallet is not problematic in the rotating structure of the pallet transferring apparatus in the related art, but in equipment in which the load of the workpiece is large, the sizes and the quantities of the thrust bearing 60 supporting the shaft-direction load of the rotating shaft 50 and the bearing 70 supporting the moment load increase, and as a result, a manufacturing cost increases.

Further, the moment load is concentrated on the bearing 70, such that a risk of a damage is structurally large and even though a problem arises in some thrust bearings 60 or bearings 70, all components should disassembled, and as a result, a repairing time is long and a level of difficulty of the work is high. Therefore, it is difficult to maintain and repair the pallet transferring apparatus.

Further, since the rotating shaft 50 is provided, additional components such as a rotating shaft guide block 80 and a needle bearing 90 are required, such that the overall structure is complicated.

Furthermore, as a diameter of the rotating shaft 50 increases, the size of a component supporting the guide block 80 increases. Therefore, the bearing 70 having a size suitable for the size of the component is required, such that design and supply and demand of the bearing 70 are also problematic.

Some examples of known apparatus for transferring pallets in a machine tool are described in the published patent documents US 4,291,797 A, JP 61-095847 A, and EP0001 152 A1.

### [Technical Problem]

The present invention is contrived to consider the aforementioned problems and an object of the present invention is to provide an MPS pallet transferring apparatus of a machine tool that ensures a stable rotating operation and saves a manufacturing cost while preventing a pallet transferring apparatus in a machine tool from being damaged and is easy to maintain and repair.

### [Technical Solution]

The present invention provides a pallet transferring apparatus of a machine tool as recited in claim 1. Preferred features are recited in the dependent claims. In order to achieve the above object, a pallet transferring apparatus of a machine tool according to the present invention includes: a carrier body 10 transferring a pallet; a circular ring gear 100 coupled to the bottom of the carrier body 10 and transferring rotational force received from a servo motor 20 to the carrier body 10 to rotate the carrier body 10; and a supporting unit 210 guiding rotation of the ring gear 100 while supporting the ring gear 100.

Further, the ring gear 100 may include: a plurality of vertical cam followers 110 disposed in a lower part of the ring gear 100 in a circumferential direction of the ring gear 100 and having a rolling shaft horizontally to the ring gear 100; and a plurality of horizontal cam followers 130 disposed in the lower part of the ring gear 100 in the circumferential direction of the ring gear and having the rolling shaft vertically to the ring gear 100.

Moreover, the supporting unit 210 may be a circular guide block that supports the vertical cam follower 110 upward, guides rolling of the vertical cam follower 110, guide rolling of the horizontal cam follower 130 in contact with the horizontal cam follower 130 on an outer circumference, and has a concentric shaft to the ring gear 100.

### [Advantageous Effects]

In a pallet transferring apparatus of a machine tool according to the present invention configured as above, a rotating shaft and a bearing in the related art can be removed, a carrier body of the pallet transferring apparatus can be effectively supported, and a risk of damage is low.

Further, when the supporting unit includes a plurality of cam followers, even though some of the cam followers are damaged, the damaged cam follower can be disassembled and replaced, and as a result, maintenance is easily performed and a cost is saved.

Furthermore, since loads of a workpiece and a pallet can be supported sufficiently by increasing the cam follower of the supporting unit even though the pallet rotating apparatus is upsized, a design is easy and supply and demand of components are smoothly achieved.

### [Description of Drawings]

FIG. 1 is a perspective view schematically showing a multi-pallet system of a machine tool.
FIG. 2 is a perspective view schematically showing a structure of a pallet transferring apparatus of a machine tool.
FIG. 3 is a cross-sectional view showing a pallet transferring apparatus of a machine tool in the related art.
FIG. 4 is a cross-sectional view for describing a structure of a rotating device in the pallet transferring apparatus of a machine tool in the related art.
FIG. 5 is a perspective view schematically showing a pallet transferring apparatus of a machine tool according to an exemplary embodiment of the present invention.
FIG. 6 is a cross-sectional view for describing a structure of the pallet transferring apparatus of a machine tool according to the exemplary embodiment of the present invention.
FIG. 7 is a diagram for describing a structure and an operation of a vertical cam follower of the pallet transferring apparatus of a machine tool according to the exemplary embodiment of the present invention.
FIG. 8 is a diagram for describing a structure of a horizontal cam follower of the pallet transferring apparatus of a machine tool according to the exemplary embodiment of the present invention.
FIG. 9 is a diagram for describing a structure and an operation of the horizontal cam follower of the pallet transferring apparatus of a machine tool according to the exemplary embodiment of the present invention.

### [Description of Main Reference Numerals of Drawings]

- 1:: Pallet
- 2:: Pallet transferring apparatus
- 10:: Carrier body
- 11:: Carrier frame
- 12:: Carrier
- 20:: Servo motor
- 30:: Gear
- 40:: Gear supporting block
- 50:: Rotating shaft
- 60:: Thrust bearing
- 70:: Bearing
- 80:: Rotating shaft guide block
- 90:: Needle bearing
- 100:: Ring gear
- 110:: Vertical cam follower
- 120:: Vertical cam follower block
- 130:: Horizontal cam follower
- 210:: Supporting unit

### [Best Mode]

Advantages and features of the present invention and methods for achieving them will be made clear from exemplary embodiments described below in detail with reference to the accompanying drawings. Hereinafter, a pallet transferring apparatus of a machine tool according to an exemplary embodiment of the present invention will be described with reference to the accompanying drawings.

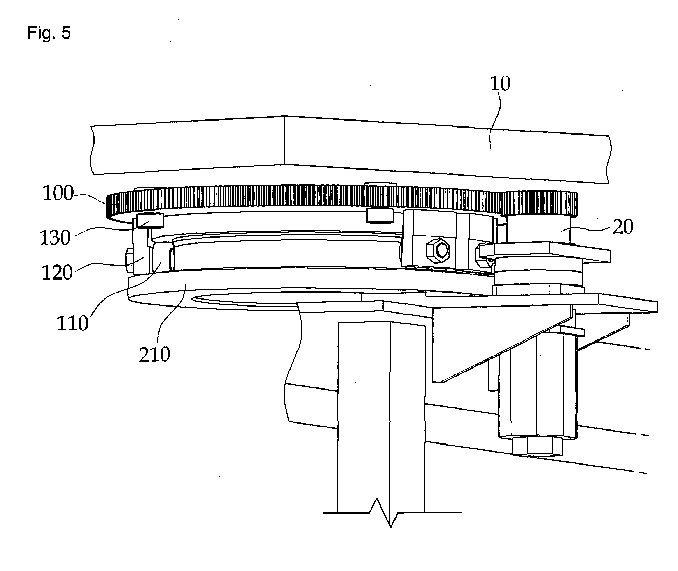

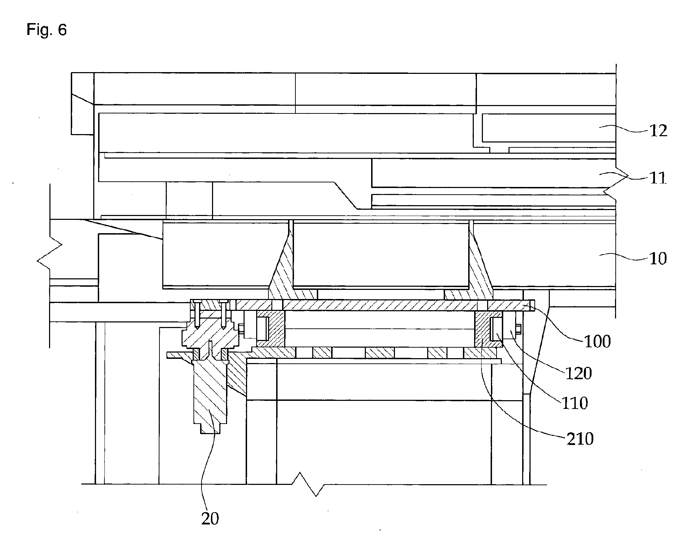

Referring to FIG. 5 and 6, a pallet transferring apparatus of a machine tool according to an exemplary embodiment of the present invention includes a carrier body 10 transferring a pallet, a circular ring gear 100 coupled to the bottom of the carrier body 10 and rotated by a servo motor 20 to guide rotation of the carrier body 10, and a supporting unit 210 guiding rotation of the ring gear 100 while supporting the ring gear 100.

As described above, the pallet transferring apparatus of the machine tool does not include a rotating shaft and a bearing included in a pallet transferring apparatus in the related art and includes the ring gear 100 directly coupled to the bottom of the carrier body 10 and the ring gear 100 is rotated by the servo motor 20 to rotate the carrier body 10.

Since the carrier body 10 has a structure of supporting a carrier 12 gripping the pallet and a carrier frame 11 guiding linear movement of the carrier 12, as the carrier body 10 rotates, the carrier 12 may be positioned in a direction to be moved.

Further, the ring gear 100 is coupled with the servo motor 20 to receive rotational force, causing the carrier body 10 coupled with the ring gear 100 to rotate and the size of the ring gear 100 is determined depending on the size of the carrier body 10 supported by the ring gear 100.

The supporting unit 210 serves to stably guide the rotation of the ring gear 100 while supporting the ring gear 100 upward. The supporting unit 210 may be a circular structure which has a concentric shaft to a rotating shaft of the ring gear 100 and may have various forms such as a sliding surface or a rolling form in order to appropriately support a load of a large-sized workpiece and smoothly guide the rotating movement of the ring gear 100.

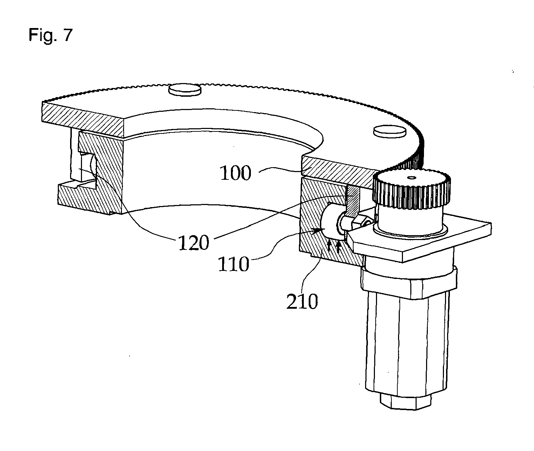

Referring to FIG. 5 and 7, the ring gear 100 may include a plurality of vertical cam followers 110 which are disposed in a lower part of the ring gear 100 in a circumferential direction and have a rolling shaft in a horizontal direction to the ring gear 100 and a plurality of horizontal cam rams 130 which are disposed in the lower part of the ring gear 100 in the circumferential direction of the ring gear and have the rolling shaft in a vertical direction to the ring gear 100.

The cam ram is also called a cam follower. The cam follower has a structure similar to a roller, and the rotating shaft thereof protrudes to one side such that the cam follower is comparatively freely mounted in a vertical or horizontal direction and the cam follower is provided in various sizes such that it is easy to supply and demand the cam follower.

The vertical cam follower 110 may be coupled to the bottom of the ring gear 100 through a block 120 to have a rotating shaft parallel to the ring gear 100 and the rotating shafts of the plurality of vertical cam followers 110 are arranged in a direction of a center shaft of the ring gear 100, such that the plurality of vertical cam followers 110 rotate with the rotation of the ring gear 100.

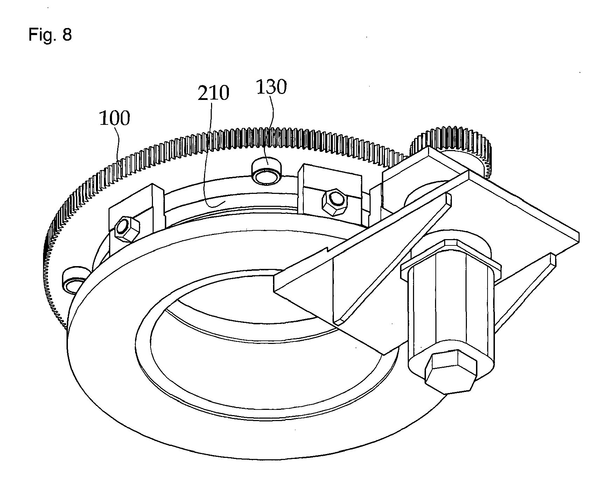

Referring to FIG. 5 and 8, the horizontal cam follower 130 is coupled such that the rotating shaft of the horizontal cam follower 130 is vertical to the bottom of the ring gear 100 and the plurality of horizontal cam followers 130 support the ring gear 100 in the horizontal direction to the ring gear 100 and rotate with the rotation of the ring gear 100.

Further, the supporting unit 210 may be a circular guide block which is concentric to the ring gear 100. The guide block supports the vertical cam follower 110 upward and guides rolling of the vertical cam follower 110 and guides rolling of the vertical cam follower 130 in contact with the horizontal cam follower 130 outside a circumference of the guide block.

Therefore, the guide block supports the ring gear 100 and the carrier body 10 upward through the vertical cam follower 110 and the horizontal cam follower 130 supports horizontal movements and moment loads of the ring gear 100 and the carrier body 10 in contact with a circumferential surface of the guide block.

Furthermore, the sizes and the number of the cam followers may be changed depending on the sizes of the ring gear 100 and the carrier body 10 supported by the vertical cam follower 110 and the horizontal cam follower 130 and the loads of the pallet and the work piece to be moved.

Further, the vertical cam follower 110 is configured in plural according to the size of the ring gear 100 and an arrangement interval and an arrangement quantity of the vertical cam followers 110 may be determined depending on the size of the pallet transferring apparatus and a load to be supported.

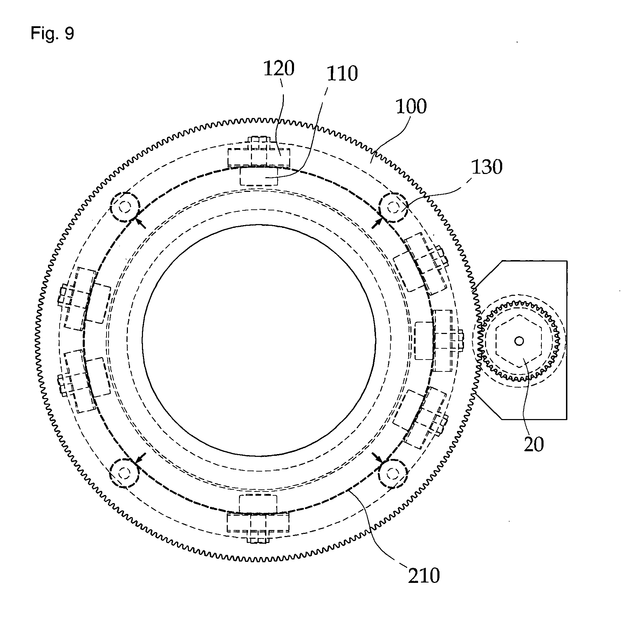

Referring to FIG. 9, the vertical cam follower 110 and the horizontal cam follower 130 are disposed below the ring gear 100 and may be arranged with an optimal quantity and interval in order to appropriately support the load.

Further, since the ring gear 100 is coupled to the bottom of the carrier body 10 having a predetermined length, the vertical cam followers 110 are disposed more densely in a longitudinal direction of the carrier body 10 on which the moment load is concentrated, thereby supporting the load more safely.

Moreover, when the sizes of the pallet, the carrier 12, and the carrier body 10 increase as the load of the workpiece increases in the pallet transferring apparatus of the machine tool, it is possible to sufficiently support the load while stabilizing the rotation of the carrier body 10 by increasing a diameter of the ring gear 100 for rotating the carrier body 10 and increasing the number of the vertical cam followers 110 and the horizontal cam followers 130 which are arranged in a circumferential direction of the ring gear 100.

Accordingly, since the above-mentioned exemplary embodiment is provided to inform those skilled in the art of the scope of the present invention, it should be understood that it is exemplary in all aspects and not limited and the present invention is just defined by the scope of the appended claims.

### [Industrial Applicability]

The present invention can be applied to a machine tool with a multi-pallet system.

## Claims

1. A pallet transferring apparatus of a machine tool, comprising:
a carrier body (10) transferring a pallet;
a circular ring gear (100) coupled to the bottom of the carrier body (10) and transferring rotational force received from a servo motor (20) to the carrier body (10) to rotate the carrier body (10); and
a supporting unit (210) guiding rotation of the ring gear (100) while supporting the ring gear (100);
**characterized in that** the ring gear (100) includes:
a plurality of blocks (120);
a plurality of vertical cam followers (110) disposed in a lower part of the ring gear (100) through the blocks (120) in a circumferential direction of the ring gear (100) and having a rolling shaft horizontally to the ring gear (100); and
a plurality of horizontal cam followers (130) disposed in the lower part of the ring gear (100) in the circumferential direction of the ring gear and having the rolling shaft vertically to the ring gear (100).

2. The pallet transferring apparatus of a machine tool of claim 1, wherein the supporting unit (210) is a circular guide block that supports the vertical cam follower (110) upward, guides rolling of the vertical cam follower (110), guides rolling of the horizontal cam follower (130) in contact with the horizontal cam follower (130) on an outer circumference, and has a concentric shaft to the ring gear (100).

## Patentansprüche

1. Vorrichtung zum Umsetzen von Paletten einer Werkzeugmaschine, die Folgendes umfasst:
- einen Trägerkörper (10), der eine Palette umsetzt;
- einen Zahnkranz (100), der mit der Unterseite des Trägerkörpers (10) gekoppelt ist und eine von einem Servomotor (20) empfangene Drehkraft zu dem Trägerkörper (10) überträgt, um den Trägerkörper (10) zu drehen; und
- eine Stützeinheit (210), die eine Drehung des Zahnkranzes (100) führt, während sie den Zahnkranz (100) stützt;
**dadurch gekennzeichnet, dass** der Zahnkranz (100) Folgendes umfasst:
• mehrere Blöcke (120);
• mehrere vertikale Nockenstößel (110), die in einem unteren Teil des Zahnkranzes (100) durch die Blöcke (120) hindurch in einer Umfangsrichtung des Zahnkranzes (100) angeordnet sind und eine Rollwelle aufweisen, die horizontal zu dem Zahnkranz (100) verläuft; und
• mehrere horizontale Nockenstößel (130), die im unteren Teil des Zahnkranzes (100) in der Umfangsrichtung des Zahnkranzes angeordnet sind und die Rollwelle aufweisen, die vertikal zu dem Zahnkranz (100) verläuft.

2. Vorrichtung zum Umsetzen von Paletten einer Werkzeugmaschine nach Anspruch 1, wobei die Stützeinheit (210) ein kreisförmiger Führungsblock ist, der den vertikalen Nockenstößel (110) aufwärts stützt, der das Rollen des vertikalen Nockenstößels (110) führt, der das Rollen des horizontalen Nockenstößels (130) in Kontakt mit dem horizontalen Nockenstößel (130) an einem Außenumfang führt, und der eine konzentrische Welle zu dem Zahnkranz (100) aufweist.

## Revendications

1. Appareil de transfert de palettes d'une machine-outil, comprenant:
- un corps de support (10) transférant une palette ;
- une couronne de train planétaire circulaire (100) couplée à la partie inférieure du corps de support (10) et transférant la force de rotation reçue d'un servomoteur (20) au corps de support (10) pour faire tourner le corps de support (10) ; et
- une unité de support (210) guidant la rotation de la couronne de train planétaire (100) tout en supportant la couronne de train planétaire (100) ;
**caractérisé en ce que** la couronne de train planétaire (100) comprend :
• une pluralité de blocs (120) ;
• une pluralité de galets de came verticaux (110) disposés dans une partie inférieure de la couronne de train planétaire (100) à travers les blocs (120) dans une direction circonférentielle de la couronne de train planétaire (100) et ayant un arbre de roulement horizontal par rapport à la couronne de train planétaire (100) ; et
• une pluralité de galets de came horizontaux (130) disposés dans la partie inférieure de la couronne de train planétaire (100) dans la direction circonférentielle de la couronne de train planétaire et ayant l'arbre de roulement vertical par rapport à la couronne de train planétaire (100).

2. Appareil de transfert de palettes d'une machine-outil selon la revendication 1, dans lequel l'unité de support (210) est un bloc de guidage circulaire qui supporte le galet de came vertical (110) vers le haut, guide le roulement du galet de came vertical (110), guide de roulement du galet de came horizontal (130) en contact avec le galet de came horizontal (130) sur une circonférence extérieure, et possède un arbre concentrique par rapport à la couronne de train planétaire (100).
